# FASCICULE DE BREVET EUROPEEN

(11) **EP 1 713 349 B1**
(45) Date de publication et mention de la délivrance du brevet: **12.11.2014**
(21) Numéro de dépôt: 05717581.2
(22) Date de dépôt: 08.02.2005
(51) Int. Cl.: A23C 9/137, A23C 9/154, A23L 1/0522, A23L 1/09

(54) **PROCEDE DE PREPARATION D'UN PRODUIT ALIMENTAIRE SEMI-FLUIDE**
VERFAHREN ZUR HERSTELLUNG EINES HALBFLÜSSIGEN NAHRUNGSMITTELPRODUKTS
METHOD FOR PREPARING A SEMI-FLUID FOODSTUFF

(30) Priorité: 11.02.2004 FR 0401346
(43) Date de publication de la demande: 25.10.2006
(73) Titulaire: Compagnie Gervais Danone, 75009 Paris (FR)
(72) Inventeur: NOBLE, Olivier, F-91400 Orsay (FR); DEPIERRIS, Anne, F-91650 Breuillet (FR)
(74) Mandataire: Regimbeau
(86) Numéro de dépôt international: PCT/FR2005/000278
(87) Numéro de publication internationale: WO 2005/079596

(56) Documents cités:
- EP-A- 0 704 169
- DD-A- 249 846
- US-A- 4 689 088

## Description

La présente invention décrit un nouveau procédé de préparation d'un produit alimentaire semi-fluide comprenant une étape d'hydrolyse enzymatique partielle d'un amidon natif. Le produit alimentaire peut en outre comprendre une préparation alimentaire contenant des particules solides.

Dans le cadre des produits alimentaires, notamment des produits laitiers, les industriels ont élargi leurs gammes de produits en y introduisant des épaississants qui permettent de modifier la texture initiale du produit ce qui a permis l'obtention de produits contenant en suspension des particules solides telles que par exemple des morceaux de fruits ou des copeaux de chocolat. Les agents de texture ajoutés à ces produits peuvent notamment favoriser la formation d'un gel plus ou moins ferme permettant aux morceaux solides, en particulier de fruits ou de chocolat, de rester en suspension dans lesdits produits alimentaires. Cependant ces épaississants, tels que de la gélatine, une fois introduits dans le produit alimentaire peuvent modifier de façon importante la texture du produit fini, qui peut ne plus correspondre à la texture caractéristique du produit initial, particulièrement si le produit initial est un yoghourt. De plus, la gélatine est un ingrédient d'origine animale. Plusieurs affaires sur des contaminations de produits d'origine animale depuis quelques années ont été à l'origine d'une désaffection vis à vis des solutions de gélatine pour leurs applications alimentaires. Ces gélatines peuvent aussi être d'origine porcine, ce qui empêche certains consommateurs de consommer des produits en contenant, pour des questions religieuses notamment.

Le brevet US 4430 349 décrit des mélanges de produits laitiers avec des solutions de pectine. La pectine est un agent gélifiant difficile à contrôler dans des produits à base de lait puisqu'elle réagit avec le calcium présent en formant immédiatement un gel. Les mélanges sont en général très granuleux et ne forment pas réellement un gel cohésif.

Le brevet US 4 510 166 décrit un amidon légèrement hydrolyse, ayant un dextrose équivalent (DE) inférieur à 5, utilisé en tant que substitut de matière grasse dans un produit alimentaire. D'une manière inhérente au procédé décrit, cet amidon légèrement hydrolyse est prégélatinisé, c'est-à-dire cuit, avant ou lors de son introduction dans le produit alimentaire.

Le brevet DD 249 846 décrit un produit sec comprenant 50% d'un amidon hydrolysé ayant un DE de 5.

La demande de brevet EP 0 704 169 décrit un amidon légèrement hydrolysé, ayant un dextrose équivalent (DE) compris entre 3 et 12, utilisé en tant que substitut de matière grasse dans un produit alimentaire. La solution d'amidon hydrolysé décrite dans cette demande de brevet est notamment caractérisée par le fait qu'elle ne peut pas être pompée à 90°C.

L'amidon natif est un produit brut qui est extrait des végétaux sans aucune modification de la molécule. Ce produit est connu de l'homme du métier pour ses propriétés alimentaires et technologiques, notamment ses propriétés de liant et d'épaississant. Ces propriétés varient en fonction des proportions en amylose ou en amylopectine, qui sont les deux fractions qui composent l'amidon.

L'amylose est un polysaccharide de l'amidon dont les macromolécules présentent une structure à prédominance linéaire. L'amylose est principalement formé d'unités glucose unies par des liaisons alpha-1,4. L'amylopectine est l'autre polysaccharide de l'amidon, dont les macromolécules présentent une structure ramifiée. L'amylopectine a environ une liaison alpha-1,6 pour trente liaisons alpha-1,4. Au cours de l'hydrolyse de l'amidon, l'amylose et l'amylopectine, qui ont des longues chaînes comprenant jusqu'à 2 000 unités glucose, se cassent au hasard, chaque fragment continuant à évoluer vers la simplification par ruptures successives. Le dextrose équivalent (DE) est un indicateur du degré d'hydrolyse d'un amidon. Il représente la valeur réductrice des sucres de l'amidon hydrolysé exprimé en pourcentage de la valeur réductrice du dextrose (glucose) pur. Le DE est calculé par rapport à la matière sèche. Le DE varie entre 0 et 100, pour un glucose non hydrolysé et totalement hydrolysé respectivement. Ainsi, plus la valeur de DE est élevée, c'est à dire proche de 100, plus le glucose est hydrolysé. L'homme du métier sait que les gels d'amidons natifs ne sont pas stables dans les compositions aqueuses à faible température et/ou pour une durée de stockage prolongée. A faible température, les gels d'amidons natifs subissent une conversion irréversible et ils peuvent se retrouver sous la forme d'une masse spongieuse insoluble dans l'eau. Lors du stockage des gels d'amidons natifs, les chaînes des amidons s'associent entre elles de manière irréversible, notamment par formation de liaisons hydrogènes, et la texture des produits peut se modifier, le gel devenant plus rigide et ayant tendance à expulser de l'eau. En outre, les dispersions aqueuses d'amidons natifs sont souvent considérées comme étant trop visqueuses. L'homme du métier considère donc que les amidons natifs ne sont pas appropriés pour une utilisation dans des produits alimentaires pour lesquels on souhaite qu'ils conservent leur texture, notamment au stockage ou à de faibles températures (température de conservation d'environ 0 à 6°C). Pour tenter de remédier aux inconvénients pré-cités, l'homme du métier a modifié les amidons natifs, notamment par greffage de substituants. Cependant, ces amidons ne permettent pas d'obtenir des textures gélifiées stables à cause de la cinétique de rétrogradation de l'amylopectine qui s'étale sur plusieurs jours.

D'une manière surprenante, les inventeurs ont constaté qu'une hydrolyse enzymatique modérée d'un amidon natif réalisée dans les conditions de l'invention a permis d'obtenir une dégradation de l'amylopectine suffisamment importante pour éviter sa rétrogradation sur des temps longs de plusieurs jours. Au refroidissement, un gel vraisemblablement constitué principalement d'amylose se forme assez rapidement et la texture de ce gel n'évolue pas tout au long de la durée de conservation du produit.

La présente invention décrit un procédé de préparation d'un produit alimentaire semi-fluide, caractérisé en ce qu'il comprend les étapes successives suivantes :
a) préparation d'une suspension aqueuse d'amidon hydrolysé fluide par hydrolyse enzymatique partielle d'un amidon natiflusgu'à un DE inférieur ou égal à 10,
b) le cas échéant, refroidissement et maintien de la suspension obtenue suite à l'étape a) à une température comprise entre 70 et 95°C ;
c) refroidissement de la suspension obtenue suite à l'étape a) ou b) à une température comprise entre 40 et 95°C ;
d) mélange à une température comprise entre 40 et 95°C de la suspension obtenue suite à l'étape c) avec un produit alimentaire.

La présente invention concerne un procédé de préparation d'un produit laitier semi-fluide, caractérisé en ce qu'il comprend les étapes successives suivantes :
a) préparation d'une suspension aqueuse d'amidon hydrolyse fluide par hydrolyse enzymatique partielle d'un amidon natif jusqu'à un DE inférieur ou égal à 10,
b) le cas échéant, refroidissement et maintien de la suspension obtenue suite à l'étape a) à une température comprise entre 70 et 95°C ;
c) refroidissement de la suspension obtenue suite à l'étape a) ou b) à une température comprise entre 40 et 70°C ;
d) mélange à une température comprise entre 40 et 70°C de la suspension obtenue suite à l'étape c) avec un produit laitier.

L'étape b) permet notamment le stockage de la suspension.

Au sens de la présente invention, on entend par l'expression « produit alimentaire semi-fluide » un produit alimentaire qui se trouve dans un état intermédiaire entre l'état solide et l'état liquide. Il présente des propriétés d'écoulement intermédiaires à celles des solides et liquides et il peut en particulier être pompé au moyen de pompes industrielles classiques.

L'étape a) comprend avantageusement les étapes successives suivantes :
i) préparation d'un mélange eau, amidon natif, le cas échéant matière sucrante, et amylase dans les proportions suivantes en poids :
   - amidon natif 2 à 30 %
   - amylase 2 à 200 ppm
   - matière sucrante 0 à 30 %
   - eau qsp 100%
ii) chauffage du mélange de l'étape i) à une température égale à la température de gélatinisation de l'amidon natif ± 20%; puis
iii) inactivation de l'amylase par chauffage du mélange obtenu suite à l'étape ii) à une température comprise entre 100 et 130°C, avantageusement à une température comprise entre 105 et 110°C.

L'amidon natif est avantageusement hydrolysé partiellement jusqu'à un DE inférieur ou égal à 5, encore plus avantageusement jusqu'à un DE inférieur ou égal à 1.

L'amylase est une enzyme dont l'action sur l'amidon provoque une dépolymérisation partielle dudit amidon, par l'hydrolyse au hasard de ses chaînes glucosidiques.

La quantité d'amidon natif initiale introduite peut notamment dépendre de la teneur en amylose de l'amidon. L'homme du métier connaît, notamment grâce à la littérature, la teneur en amylose de chaque amidon. Plus l'amidon est riche en amylose, plus la quantité introduite d'amidon natif pourra être faible. Au contraire, si l'amidon est pauvre en amylose, la quantité d'amidon natif qu'il faudra introduire sera plus importante. Selon une variante avantageuse de l'invention, la quantité d'amidon natif initiale introduite est comprise entre 2 et 20 % en masse, encore plus avantageusement entre 3 et 15% en masse, par rapport au poids total du mélange de l'étape i).

La quantité d'amylase à introduire va également dépendre de la teneur en amidon. Selon une variante avantageuse de l'invention, la quantité d'amylase introduite est comprise entre 5 et 100 ppm, encore plus avantageusement entre 2 et 30 ppm, encore plus avantageusement entre 5 et 20 ppm, par rapport au poids total du mélange de l'étape i). L'amidon natif est avantageusement hydrolysé partiellement jusqu'à un DE inférieur ou égal à 5. Pour ce faire, lors de l'étape i), on introduit 2 à 20 % en poids d'amidon natif, 2 à 30 ppm d'amylase, 0 à 30 % en poids de matière sucrante et de l'eau en quantité suffisante pour atteindre 100 % en poids, les pourcentages en poids étant exprimés par rapport au poids total du mélange.

L'eau ajoutée peut être l'eau du robinet.

La valeur de pH du mélange de l'étape i) est avantageusement ajustée à une valeur comprise entre 4,6 et 8, ce qui correspond à un domaine de valeurs de pH dans lequel l'amylase est particulièrement active.

La préparation de la suspension aqueuse d'amidon hydrolysé fluide débute avantageusement par la mise en suspension dans l'eau de l'amidon natif et le cas échéant de la matière sucrante. De l'acide citrique, par exemple, peut ensuite être ajouté pour ajuster le pH du mélange puis on ajoute l'amylase.

Lors de l'étape i), on peut éventuellement ajouter au mélange du sucre et/ou des matières sucrantes. Comme exemple de matière sucrante, on peut notamment citer le sucre de betterave ou sucre blanc, le sucre de canne ou sucre roux, le fructose, le sirop de glucose, le miel, et les édulcorants tels que l'aspartame, la saccharine, le cyclamate, l'acésulfane K, le sucralose et la thaumatine. La quantité de matière sucrante et/ou de sucre ajoutée varie avantageusement de 5 à 20 % en poids par rapport au poids total du mélange de l'étape i).

Le chauffage de l'étape ii) à une température égale à la température de gélatinisation de l'amidon natif ± 20% permet d'amorcer la réaction d'hydrolyse enzymatique. En effet, tant que le mélange de l'étape i) est maintenu à température ambiante, il n'y a pas de réaction d'hydrolyse enzymatique.

Au sens de la présente invention, l'expression «température de gélatinisation de l'amidon natif ± 20%» recouvre la plage des températures comprises entre la température de gélatinisation de l'amidon natif moins 20% de cette valeur et la température de gélatinisation de l'amidon natif plus 20% de cette valeur, les bornes pouvant être incluses.

Le mélange est avantageusement chauffé à l'étape ii) à une température égale à la température de gélatinisation de l'amidon natif ± 20°C, avantageusement à la température de gélatinisation de l'amidon natif ± 15°C, encore plus avantageusement à la température de gélatinisation de l'amidon natif ± 10°C, et encore plus avantageusement à la température de gélatinisation de l'amidon natif ± 3°C.

Au sens de la présente invention, les expressions « température de gélatinisation de l'amidon natif ± X°C », où X représente une valeur numérique donnée, recouvre la plage des températures comprises entre la température de gélatinisation de l'amidon natif moins X°C et la température de gélatinisation de l'amidon natif plus X°C, les bornes pouvant être incluses.

L'ajout éventuel de sucre et/ou de matière sucrante lors de l'étape i) peut, dans certains cas, augmenter la valeur de la température de gélatinisation de l'amidon natif. Ainsi, dans le cadre de la présente invention, la température de gélatinisation qui est à prendre en considération correspond à la température de gélatinisation de l'amidon natif dans l'eau pure en présence éventuelle de la matière sucrante.

La température de gélatinisation de l'amidon natif dans l'eau pure dépend de la nature de l'amidon natif considéré, mais elle ne varie pas au sein d'une même famille. Par exemple, la température de gélatinisation de l'amidon de manioc est de 70°C quelque soit par exemple la date de récolte dudit manioc, celle de l'amidon de pomme de terre est de 63°C, celle de l'amidon de maïs est de 76°C, celle de l'amidon de blé est de 82°C.

Lors de l'étape ii), le mélange est avantageusement maintenu à ladite température de chauffage pendant 1 à 15 minutes, encore plus avantageusement pendant 2 à 8 minutes. Suite à l'étape ii), l'enzyme, c'est-à-dire l'amylase, est désactivée par un traitement thermique. Cette étape iii) d'inactivation de l'amylase par chauffage à une température comprise entre 100 et 130°C, avantageusement entre 105 et 110°C, a une durée comprise avantageusement entre 30 secondes et 15 minutes, encore plus avantageusement entre 2 et 5 minutes.

Le procédé selon l'invention, peut en outre comprendre suite à l'étape c) une étape de foisonnement par incorporation d'au moins une substance à propriété tensio-active.

Le foisonnement permet une augmentation de volume de la suspension aqueuse d'amidon natif hydrolysé fluide conduisant à la formation d'une mousse stable.

La substance à propriété tensio-active peut être soit un émulsifiant soit une espèce tensio-active. L'espèce tensio-active est avantageusement choisie dans le groupe constitué par les polymères, tels que les protéines laitières, les protéines d'oeufs et également la gomme d'acacia (gomme arabique) ou leurs mélanges ou tout autre polymère à propriété tensio-active. L'émulsifiant est avantageusement choisi dans le groupe constitué par les mono-, diglycérides, le stéaroyle-2-lactylate de sodium, les polysorbates, les sucroglycérides ou leurs mélanges.

Le foisonnement est réalisé dans un foisonneur statique ou dynamique.

L'étape de foisonnement est avantageusement réalisée à une température supérieure à 70°C. Suite à cette étape de foisonnement, la suspension aqueuse d'amidon natif hydrolyse fluide foisonnée peut avantageusement être refroidie à une température comprise entre 40 et 95°C, pour favoriser notamment son stockage.

L'amylase utilisée dans le cadre de la présente invention est avantageusement choisie dans le groupe constitué par une α-amylase d'origine fongique, une α-amylase d'origine bactérienne ou une β-amylase d'origine végétale. Comme exemple d'α-amylase d'origine fongique, on peut notamment citer l'α-amylase issue d'Aspergillus oryzae ou l'α-amylase issue d'Aspergillus niger. Comme exemple d'α-amylase d'origine bactérienne on peut notamment citer l'α-amylase issue de Bacillus subtilis ou l'α-amylase issue de Bacillus liqueniformis ou l'α-amylase issue de Bacillus amyloliquefaciens. Comme exemple de β-amylase d'origine végétale, on peut notamment citer la β-amylase issue du malt. Selon une variante avantageuse de l'invention, l'amylase est une α-amylase d'origine bactérienne.

L'hydrolyse enzymatique partielle d'un amidon natif jusqu'à un DE inférieur ou égal à 10 permet l'obtention d'une suspension aqueuse d'amidon hydrolysé fluide qui peut soit être conservée sous forme liquide à une température comprise entre 70 et 95°C (étape b)), soit être introduite directement dans le produit alimentaire à une température comprise entre 40 et 95°C, le cas échéant à une température comprise entre 40 et 70°C.

A une température comprise entre 40 et 95°C, la suspension aqueuse d'amidon hydrolysé fluide est pompable et versable, pendant plusieurs minutes.

La température ne doit pas dépasser 95°C sinon la suspension qui comprend une grande proportion d'eau risquerait de bouillir. Si la suspension doit être stockée avant d'être mélangée au produit alimentaire, la température de l'étape b) doit être maintenue au dessus de 70°C afin que la température de stockage soit toujours maintenue supérieure à la température de rétrogradation de l'amylose. La température de rétrogradation de l'amylose est la température à laquelle l'amidon gélatinisé tend à revenir d'un état soluble, dispersé et amorphe à un état cristallin insoluble (suspension diluée) ou à un gel tridimensionnel (suspension concentrée).

Pour des raisons pratiques, le produit alimentaire de l'étape d) est avantageusement un produit alimentaire pompable, c'est-à-dire liquide ou semi-fluide.

Le mélange de l'étape d) est effectué à une température supérieure à 40°C pour éviter que la suspension aqueuse d'amidon hydrolysé fluide ne prenne en masse. En effet, ladite suspension aqueuse d'amidon hydrolysé fluide gélifie au refroidissement, notamment elle peut commencer à gélifier si la température du mélange est inférieure à 40°C. En outre, la température de mélange ne dépasse avantageusement pas 95°C, encore plus avantageusement elle ne dépasse pas 70°C, afin notamment de ne pas dégrader les ferments vivants qui pourraient être présents dans le produit alimentaire, notamment si ledit produit alimentaire est un produit laitier. De plus, dans le cas particulier où le produit alimentaire de l'étape d) est un produit laitier, le mélange sera avantageusement réalisé à une température d'environ 40°C, dans le but principal de ne pas dégrader les ferments lactiques présents. En effet, dans le cas des yoghourts par exemple, on considère que les ferments lactiques sont détruits à une température supérieure à 60°C. Si le produit alimentaire n'est pas un produit laitier, par exemple un produit à base de soja, la température de mélange est une caractéristique moins importante du procédé selon la présente invention. Le critère de choix de la température de mélange dépendra dans ce dernier cas plus de la suspension aqueuse d'amidon hydrolysé fluide que du produit alimentaire.

Les proportions de suspension aqueuse d'amidon hydrolysé fluide ajoutée dans le produit alimentaire sont comprises entre 20 et 70% de suspension aqueuse d'amidon hydrolysé fluide, par rapport au poids total du produit final, et avantageusement entre 25 et 60% de suspension aqueuse d'amidon hydrolysé fluide, par rapport au poids total du produit final.

On peut en outre introduire à l'étape i) une enzyme saccharifiante. Cette enzyme saccharifiante, qui peut par exemple être une amyloglucosidase fongique ou une pullulanase d'origine bactérienne, permet d'une manière synergétique d'intensifier l'activité de l'amylase lors de l'étape ii). L'étape iii) du procédé selon l'invention permet alors également l'inactivation de ladite enzyme saccharifiante. Comme exemple d'amyloglucosidase fongique, on peut notamment citer l'amyloglucosidase issue d'Aspergillus niger ou l'amyloglucosidase issue d'Aspergillus oryzae ou l'amyloglucosidase issue de rhizopus spp. Comme exemple de pullulanase d'origine bactérienne, on peut notamment citer la pullulanase issue de Bacillus sp.

L'amidon natif est avantageusement choisi dans le groupe constitué par l'amidon de manioc, l'amidon de maïs, l'amidon de blé, l'amidon de froment, l'amidon d'orge, l'amidon de pommes de terre, l'amidon de riz, l'amidon de seigle, l'amidon de sorgho, l'amidon de mil, l'amidon de sagou et l'amidon de banane. L'amidon natif est plus avantageusement choisi dans le groupe constitué par l'amidon de manioc, l'amidon de maïs, l'amidon de blé, l'amidon de pommes de terre, l'amidon de riz et l'amidon de seigle. L'amidon natif est préférentiellement l'amidon de manioc.

Selon une variante avantageuse de l'invention, l'amidon natif est l'amidon de manioc et l'amylase est une α-amylase d'origine bactérienne.

Le produit alimentaire, introduit lors de l'étape d), est avantageusement choisi dans le groupe constitué par les produits laitiers ou les produits d'origine végétale, notamment les produits à base de soja, les produits à base de céréales, les produits à base de fruits ou leurs mélanges.

Comme exemple de produit laitier, on peut notamment citer un yoghourt, un lait, un lait fermenté, un lait concentré, un lait partiellement écrémé pasteurisé, un lait partiellement écrémé concentré, un lait écrémé pasteurisé, un lait écrémé concentré, un fromage frais, une crème dessert, une crème fraîche éventuellement fouettée, une crème pasteurisée, une crème légère pasteurisée et leurs mélanges. Un yoghourt est un produit laitier coagulé obtenu par fermentation lactique grâce à l'action de microorganismes thermophiles, issus de cultures de Streptococcus thermophilus et Lactobacillus delbruekii bulgaricus, à partir de lait et de produits laitiers. On appellera produit laitier fermenté au sens de la présente invention des produits comprenant en outre des bactéries lactiques, autres que les microorganismes Streptococcus thermophilus et Lactobacillus delbruekii bulgaricus, et notamment des microorganismes issus de souches de Bifidobacterium et/ou de Lactobacillus acidophilus et/ou de Lactobacillus casei. Le produit laitier est préférentiellement un produit laitier d'origine bovine (vache ou buffle), mais ce peut également être un produit laitier d'origine équine (jument), caprine (chèvre ou chamelle) ou ovine (brebis).

Le produit d'origine végétale peut être notamment un produit à base de soja, à base de céréales ou à base de purées de fruits.

Le produit alimentaire peut être un mélange de produit laitier et de produit d'origine végétale, tel que par exemple un yoghourt, un lait ou une crème lait-soja.

Les produits à base de céréales peuvent notamment être du jus d'avoine, d'orge, de blé ou un produit céréalier fermenté. Les produits à base de fruits peuvent notamment être des confitures, des compotes ou des purées de fruits.

Le procédé selon l'invention comprend avantageusement en outre simultanément ou suite à l'étape d), une étape e) d'incorporation au produit d'une préparation alimentaire contenant des particules solides. Ladite préparation alimentaire est avantageusement incorporée à une température comprise entre 40 et 95°C, le cas échéant à une température comprise entre 40 et 70°C. Si le produit alimentaire introduit à l'étape d) est un produit laitier, ladite préparation alimentaire sera avantageusement incorporée à une température comprise entre 40 et 60°C, encore plus avantageusement à une température d'environ 40°C. Cette incorporation est effectuée à une température supérieure à 40°C pour éviter que la suspension aqueuse d'amidon hydrolysé fluide ne prenne en masse.

Les proportions de préparation alimentaire contenant des particules solides ajoutée dans le produit alimentaire sont comprises entre 5 et 20% de préparation alimentaire contenant des particules solides, par rapport au poids total du produit fini, et avantageusement entre 7 et 18% de préparation alimentaire contenant des particules solides, par rapport au poids total du produit fini.

Lesdites particules solides sont avantageusement choisies dans le groupe constitué par des morceaux de céréales, des morceaux de fruits, des copeaux de chocolat, des éclats de caramel ou des grains de café. La préparation alimentaire peut contenir des particules solides d'arômes chauds. Comme exemples d'arômes chaud, on peut notamment citer le chocolat, le cacao, le caramel, la vanille, le café, le praliné, le nougat, le miel, des arômes de fruits oléagineux, tels que notamment la noix, la noisette, l'amande, la pistache, et des arômes d'épices tels que notamment la cannelle, le coriandre, le curry. Lors de la gélification du produit final obtenu par le procédé selon l'invention, les particules solides seront réparties d'une manière homogène dans ledit produit.

Le procédé comprend avantageusement en outre une étape f) de mise en pot du produit obtenu suite à l'étape d) ou e). La mise en pot est suivie de la gélification de l'amidon du produit dans le pot en quelques heures à une température comprise entre 0 et 12°C, avantageusement à environ 4°C.

Dans le cas des produits laitiers notamment, ce produit mis en pot pourra ensuite être conservé à une température comprise entre 0 et 12°C, avantageusement à environ 6°C. Le procédé selon l'invention permet l'obtention d'un produit qui reste stable, c'est-à-dire dont la texture n'évolue pas, pendant au moins 40 jours lorsqu'il est conservé à une température comprise entre 0 et 12°C, avantageusement à une température d'environ 6°C.

La présente invention concerne également un produit alimentaire semi-fluide, caractérisé en ce qu'il comprend 20 à 70% en poids, par rapport au poids total dudit produit, d'une suspension aqueuse d'amidon natif hydrolysé fluide ayant un DE inférieur ou égal à 10.

La suspension aqueuse d'amidon natif hydrolysé fluide a avantageusement un DE inférieur ou égal à 5, encore plus avantageusement un DE inférieur ou égal à 1.

La suspension aqueuse d'amidon natif hydrolysé fluide est susceptible d'être obtenue par le procédé selon l'invention décrit précédemment.

Le produit alimentaire semi-fluide selon l'invention comprend avantageusement en poids, par rapport au poids total dudit produit :
- 30 à 70% du produit alimentaire ;
- 20 à 70% de la suspension aqueuse d'amidon natif hydrolysé fluide ayant un DE inférieur ou égal à 10 ;
- le cas échéant, 5 à 30% d'une préparation alimentaire contenant des particules solides.

Le produit alimentaire semi-fluide comprend encore plus avantageusement en poids, par rapport au poids total dudit produit 35 à 60% du produit alimentaire, 25 à 50% de la suspension aqueuse d'amidon natif hydrolysé fluide ayant un DE inférieur ou égal à 10 et le cas échéant, 7 à 18% d'une préparation alimentaire contenant des particules solides.

La texture finale du produit alimentaire semi-fluide, gélifiée ou semi-gélifiée, semble notamment dépendre de la température de l'étape ii) de traitement enzymatique de l'amidon.

On peut obtenir un produit gélifié lorsque la température de traitement enzymatique (étape ii)) est maintenue légèrement au dessus de la température de gélatinisation de l'amidon.

Selon la variante avantageuse de l'invention, pour obtenir un produit alimentaire gélifié, on maintient lors de l'étape ii) la température du traitement enzymatique à une température supérieure de 2°C à 20°C à la température de gélatinisation de l'amidon, avantageusement à une température supérieure de 2°C à 10°C à la température de gélatinisation de l'amidon.

On peut obtenir un produit semi-gélifié lorsque la température de traitement enzymatique (étape ii)) est maintenue légèrement en dessous de la température de gélatinisation de l'amidon.

Selon une variante avantageuse de l'invention, pour obtenir un produit alimentaire semi-gélifié, on maintient lors de l'étape ii) la température du traitement enzymatique à une température égale à la température de gélatinisation de l'amidon moins 2 à 20°C, avantageusement moins 2 à 5°C.

Le produit alimentaire semi-fluide selon l'invention, dans ses deux variantes, est avantageusement choisi dans le groupe constitué par les produits laitiers ou les produits d'origine végétale, notamment un produit à base de soja, les produits à base de céréales, les produits à base de fruits ou leurs mélanges, tels que définis précédemment.

Le produit alimentaire semi-fluide selon l'invention reste stable, c'est-à-dire que sa texture n'évolue pas, pendant au moins 30 jours lorsqu'il est conservé à une température comprise entre 0 et 12°C, avantageusement à une température d'environ 6°C. La texture du produit est liée à la force du gel qui peut être définie comme la force mesurée à la rupture du gel lors de la pénétration d'un mobile dans le produit, mesurée par un texturomètre. Dire que la texture du gel d'un produit n'évolue pas signifie que la force du gel mesurée sur un produit à t=30 jours est égale à celle mesurée sur le produit à t=0 ou 1 jour plus ou moins 20%.

La force du gel peut être mesurée au moyen d'un analyseur de texture de marque TA-XT2i commercialisé par Stable Microsystems en utilisant un mobile de diamètre 25 mm avec une vitesse de pénétration du mobile dans le produit de 0,2 mm/s. Pour un produit de type yoghourt ferme, cette force de gel est d'environ 32 g. Il s'agit de la force mesurée à la rupture du gel, cette rupture se produisant pour une distance de pénétration d'environ 7 mm.

Les particules solides de ladite préparation alimentaire sont avantageusement choisies dans le groupe constitué par des morceaux de céréales, des morceaux de fruits, des copeaux de chocolat, des éclats de caramel ou des grains de café. La préparation alimentaire peut contenir des particules solides d'arômes chauds. Comme exemples d'arômes chaud, on peut notamment citer le chocolat, le cacao, le caramel, la vanille, le café, le praliné, le nougat, le miel, des arômes de fruits oléagineux, tels que notamment la noix, la noisette, l'amande, la pistache, et des arômes d'épices tels que notamment la cannelle, le coriandre, le curry.

Le produit alimentaire semi-fluide peut être un produit foisonné ou semi-foisonné, c'est-à-dire pouvant être sous la forme d'une mousse. Selon cette variante, le produit alimentaire est avantageusement un yoghourt, un fromage frais ou une crème dessert neutre.

Le produit alimentaire semi-fluide selon l'invention peut en outre comprendre des additifs alimentaires. L'utilisation de ces additifs devra être en conformité avec la réglementation en vigueur. Ces additifs peuvent être des édulcorants et/ou des aromatisants et/ou des colorants et/ou des agents de conservation classiquement utilisés par l'homme du métier dans le cadre de la fabrication de produits alimentaires, et notamment dans le cadre de la production de yoghourts. Cette liste n'étant pas limitative, d'autres additifs alimentaires peuvent être utilisés et cela sous deux conditions : ils ne devront pas être mis directement dans les composés lactés et ils ne seront apportés que par des ingrédients ajoutés.

La présente invention concerne enfin l'utilisation d'une suspension aqueuse d'amidon natif hydrolysé fluide ayant un DE inférieur ou égal à 10, avantageusement inférieur ou égal à 5, encore plus avantageusement inférieur ou égal à 1, pour former, après incorporation dans un produit alimentaire, un gel stable permettant de maintenir en suspension dans ledit produit alimentaire des particules solides alimentaires. Le produit alimentaire est avantageusement choisi dans le groupe constitué par les produits laitiers ou les produits d'origine végétale, notamment un produit à base de soja, les produits à base de céréales, les produits à base de fruits ou leurs mélanges, tels que définis précédemment.

L'utilisation d'une suspension aqueuse d'amidon natif ayant un DE inférieur ou égal à 10, avantageusement inférieur ou égal à 5, encore plus avantageusement inférieur ou égal à 1, dans un produit alimentaire permet l'obtention d'un produit qui reste stable, c'est-à-dire dont la texture n'évolue pas, pendant au moins 40 jours lorsqu'il est conservé à une température comprise entre 0 et 12°C, avantageusement à une température d'environ 6°C.

Le produit final aura une texture gélifiée ou semi-gélifiée en fonction de la température à laquelle le traitement enzymatique a été réalisé, tel que décrit précédemment.

Les exemples suivants illustrent la présente invention sans toutefois en limiter la portée.

### Exemple 1 : Procédé de préparation d'un produit alimentaire semi-fluide gélifié

La préparation de la masse gélifiante débute par la mise en suspension dans l'eau (eau du robinet) de 12% en poids d'amidon natif de manioc (commercialisé par la société National Starch sous la référence Tapioca starch), par rapport au poids total du mélange. De l'acide citrique est ensuite ajouté pour obtenir un pH égal à 4,70 ainsi que 0,004% d'α-amylase bactérienne (commercialisée par la société Novozymes sous la référence BAN240L).

Le mélange obtenu est chauffé à 75°C puis maintenu pendant 3 minutes à cette température dans un premier chambreur tubulaire. Il est ensuite chauffé à 110°C puis maintenu pendant 3 minutes à cette température dans un second chambreur tubulaire. Le mélange est ensuite refroidi à une température variant entre 40 et 70°C au moyen d'un échangeur à plaques.

Dans la suspension d'amidon hydrolyse fluide ainsi obtenue, l'amidon natif a un DE inférieur à 5.

La suspension d'amidon est incorporée rapidement dans le produit à base de lait : la suspension d'amidon est refroidie à 40°C et incorporée à la masse laitière.

### Exemple 2 : Composition d'un produit laitier de type yoghourt ferme nature

50% en masse de yoghourt brassé à 3,3% de matière grasse
50% en masse de la suspension d'amidon de manioc à 12% obtenue selon l'exemple 1

### Exemple 3 : Composition d'un produit laitier de type yoghourt ferme contenant un jus de fruits

42 ,5% en masse de yoghourt brassé à 3,3% de matière grasse
42,5% en masse de la suspension d'amidon de manioc à 12% obtenue selon l'exemple 1
15%o en masse de concentré de jus de fruits

### Exemple 4 : Composition d'un produit laitier de type yoghourt ferme avec morceaux de fruits et/ou copeaux de chocolat

43,5% en masse de yoghourt brassé nature à 0% de matière grasse
43,5% en masse de la suspension d'amidon de manioc à 12% obtenue selon l'exemple 1
13% en masse d'une préparation de fruits et/ou de chocolat

### Exemple 5 : Composition de bouchées gélifiées au fromage frais et aux fruits

34%) en masse de fromage frais
51% en masse de la suspension d'amidon de manioc à 12% obtenue selon l'exemple 1
15% en masse d'une préparation de fruits

### Exemple 6 : Procédé de préparation d'un produit alimentaire semi-fluide semi gélifié

La préparation de la masse gélifiante débute par la mise en suspension dans l'eau (eau du robinet) de 12% en poids d'amidon natif de manioc (commercialisé par la société National Starch sous la référence Tapioca starch), par rapport au poids total du mélange et de 7%> de sucre. De l'acide citrique est ensuite ajouté pour obtenir un pH égal à 4,65 ainsi que 0,003% d'α-amylase bactérienne (commercialisée par la société Novozymes sous la référence BAN240L).

Le mélange obtenu est chauffé à 67°C puis maintenu pendant 3 minutes à cette température dans un premier chambreur tubulaire. Il est ensuite chauffé à 110°C puis maintenu pendant 3 minutes à cette température dans un second chambreur tubulaire. Le mélange est ensuite refroidi à une température variant entre 40 et 70°C au moyen d'un échangeur à plaques.

Dans la suspension d'amidon hydrolyse fluide ainsi obtenue, l'amidon natif a un DE inférieur à 5.

La suspension d'amidon est incorporée rapidement dans le produit à base de lait : la suspension d'amidon est refroidie à 40°C et incorporée à la masse laitière.

### Exemple 7 : Composition d'un produit laitier de type yoghourt brassé semi-gélifié avec morceaux de fruits et/ou copeaux de chocolat

61,5% en masse de yoghourt brassé à 3,3% de matière grasse
20,5% en masse de la suspension d'amidon de manioc à 12% obtenue selon l'exemple
18% en masse d'une préparation de fruits et/ou de chocolat

## Revendications

1. Procédé de préparation d'un produit laitier semi-fluide, **caractérisé en ce qu'**il comprend les étapes successives suivantes :
a) préparation d'une suspension aqueuse d'amidon hydrolysé fluide par hydrolyse enzymatique partielle d'un amidon natif jusqu'à un DE inférieur ou égal à 10,
b) le cas échéant, refroidissement et maintien de la suspension obtenue suite à l'étape a) à une température comprise entre 70 et 95°C ;
c) refroidissement de la suspension obtenue suite à l'étape a) ou b) à une température comprise entre 40 et 70°C ;
d) mélange à une température comprise entre 40 et 70°C de la suspension obtenue suite à l'étape c) avec un produit laitier.

2. Procédé selon la revendication 1, **caractérisé en ce que** lors de l'étape a), l'amidon natif est hydrolysé partiellement jusqu'à un DE inférieur ou égal à 5, avantageusement inférieur ou égal à 1.

3. Procédé selon la revendication 1 ou 2, **caractérisé en ce que** l'étape a) comprend les étapes successives suivantes :
i) préparation d'un mélange eau, amidon natif, le cas échéant matière sucrante, et amylase dans les proportions suivantes en poids :
- amidon natif 2 à 30 %
- amylase 2 à 200 ppm
- matière sucrante 0 à 30 %
- eau qsp 100%
ii) chauffage du mélange de l'étape i) à une température égale à la température de gélatinisation de l'amidon natif ± 20%; puis
iii) inactivation de l'amylase par chauffage du mélange obtenu suite à l'étape ii) à une température comprise entre 100 et 130°C, avantageusement à une température comprise entre 105 et 110°C.

4. Procédé selon la revendication 3, **caractérisé en ce que** lors de l'étape i), on introduit 2 à 20 % en poids d'amidon natif, par rapport au poids total du mélange.

5. Procédé selon la revendication ou 4, **caractérisé en ce que** lors de l'étape i), on introduit 2 à 30 ppm d'amylase.

6. Procédé selon l'une quelconque des revendications 3 à 5, **caractérisé en ce que** lors de l'étape ii), le mélange est maintenu à ladite température de chauffage pendant 1 à 15 minutes, avantageusement 2 à 8 minutes.

7. Procédé selon l'une quelconque des revendications 3 à 6, **caractérisé en ce que** l'étape iii) d'inactivation de l'amylase par chauffage a une durée comprise entre 30 secondes et 15 minutes, avantageusement comprise entre 2 et 5 minutes.

8. Procédé selon l'une quelconque des revendications 1 à 7, **caractérisé en ce qu'**il comprend en outre, suite à l'étape c), une étape de foisonnement par incorporation d'au moins un émulsifiant.

9. Procédé selon l'une quelconque des revendications 3 à 8, **caractérisé en ce que** ladite amylase est choisie dans le groupe constitué par une α-amylase d'origine fongique ou une α-amylase d'origine bactérienne ou une β-amylase d'origine végétale.

10. Procédé selon l'une quelconque des revendications 3 à 9, **caractérisé en ce qu'**à l'étape i) on introduit en outre une enzyme saccharifiante et que l'étape iii) permet également l'inactivation de ladite enzyme saccharifiante.

11. Procédé selon l'une quelconque des revendications 1 à 10, **caractérisé en ce que** l'amidon natif est choisi dans le groupe constitué par l'amidon de manioc, l'amidon de maïs, l'amidon de blé, l'amidon de froment, l'amidon d'orge, l'amidon de pommes de terre, l'amidon de riz, l'amidon de seigle, l'amidon de sorgho, l'amidon de mil, l'amidon de sagou et l'amidon de banane.

12. Procédé selon la revendication 11, **caractérisé en ce que** l'amidon natif est l'amidon de manioc.

13. Procédé selon l'une quelconque des revendications 1 à 12, **caractérisé en ce qu'**il comprend en outre simultanément ou suite à l'étape d), une étape e) d'incorporation d'une préparation alimentaire contenant des particules solides.

14. Procédé selon la revendication 13, **caractérisé en ce que** lesdites particules solides sont choisies dans le groupe constitué par des morceaux de céréales, des morceaux de fruits, des copeaux de chocolat, des éclats de caramel ou des grains de café.

15. Produit laitier semi-fluide susceptible d'être obtenu par le procédé selon l'une quelconque des revendications 1 à 15, **caractérisé en ce qu'**il comprend 20 à 70% en poids, par rapport au poids total du produit, d'une suspension aqueuse d'amidon natif hydrolysé fluide ayant un DE inférieur à 5.

16. Produit selon la revendication 15, **caractérisé en ce qu'**il comprend en poids, par rapport au poids total dudit produit :
- 30 à 70% du produit laitier ;
- 20 à 70% de la suspension aqueuse d'amidon natif hydrolysé fluide ayant un DE inférieur à 5 ;
- le cas échéant, 5 à 30% d'une préparation alimentaire contenant des particules solides.

17. Produit laitier selon la revendication 15 ou 16, **caractérisé en ce que** ladite suspension aqueuse d'amidon natif hydrolysé fluide a un DE inférieur ou égal à 1.

18. Produit selon l'une quelconque des revendications 15 à 17, **caractérisé en ce que** lesdites particules solides sont choisies dans le groupe constitué par des morceaux de céréales, des morceaux de fruits, des copeaux de chocolat, des éclats de caramel ou des grains de café.

19. Produit selon l'une quelconque des revendications 15 à 18, **caractérisé en ce qu'**il est semi-foisonné ou foisonné.

20. Produit selon l'une quelconque des revendications 15 à 19, caractérisé en ce le produit laitier est choisi dans le groupe constitué par un yoghourt, un lait, un lait fermenté, un fromage frais, une crème dessert, une crème fraîche éventuellement fouettée.

21. Utilisation d'une suspension aqueuse d'amidon natif hydrolysé fluide ayant un DE inférieur ou égal à 10, avantageusement inférieur ou égal à 5 pour sa mise en oeuvre dans le procédé de la revendication 1, pour former, après incorporation dans un produit laitier, un gel stable permettant de maintenir en suspension dans ledit produit alimentaire des particules solides alimentaires.

## Patentansprüche

1. Verfahren zum Herstellen eines halbflüssigen Milchprodukts, **dadurch gekennzeichnet, dass** es die nachstehenden, aufeinanderfolgenden Schritte umfasst:
a) Herstellen einer wässrigen Suspension aus fließfähiger, hydrolysierter Stärke durch enzymatische Teilhydrolyse einer nativen Stärke bis zu einem Dextrose-Äquivalent (DE) unter oder gleich 10,
b) gegebenenfalls Abkühlen und Halten der in Folge von Schritt a) gewonnenen Suspension auf einer Temperatur zwischen 70 und 95 °C;
c) Abkühlen der in Folge von Schritt a) oder b) gewonnenen Suspension auf eine Temperatur zwischen 40 und 70 °C;
d) Vermischen der in Folge von Schritt c) gewonnenen Suspension mit einem Milchprodukt bei einer Temperatur zwischen 40 und 70 °C.

2. Verfahren nach Anspruch 1, **dadurch gekennzeichnet, dass** bei Schritt a) die native Stärke teilweise hydrolysiert wird bis zu einem Dextrose-Äquivalent unter oder gleich 5, vorteilhaft unter oder gleich 1.

3. Verfahren nach Anspruch 1 oder 2, **dadurch gekennzeichnet, dass** der Schritt a) die nachstehenden, aufeinanderfolgenden Schritte umfasst:
i) Herstellen eines Gemischs aus Wasser, nativer Stärke, gegebenenfalls Süßungsmittel und Amylase in den nachstehenden Gewichtsverhältnissen:
- native Stärke 2 bis 30 %
- Amylase 2 bis 200 ppm
- Süßungsmittel 0 bis 30 %
- Wasser ad 100 %
ii) Erhitzen des Gemischs aus Schritt i) auf eine Temperatur gleich der Verkleisterungstemperatur von nativer Stärke ± 20 %, dann
iii) Inaktivierung der Amylase durch Erhitzen des in Folge von Schritt ii) gewonnenen Gemischs auf eine Temperatur zwischen 100 und 130 °C, vorteilhaft auf eine Temperatur zwischen 105 und 110 °C.

4. Verfahren nach Anspruch 3, **dadurch gekennzeichnet, dass** in Schritt i) 2 bis 20 Gew.-% native Stärke im Verhältnis zum Gesamtgewicht des Gemischs zugegeben wird.

5. Verfahren nach Anspruch 4, **dadurch gekennzeichnet, dass** in Schritt i) 2 bis 30 ppm Amylase zugegeben wird.

6. Verfahren nach einem der Ansprüche 3 bis 5, **dadurch gekennzeichnet, dass** in Schritt ii) das Gemisch für 1 bis 15 Minuten, vorteilhaft 2 bis 8 Minuten auf der Erhitzungstemperatur gehalten wird.

7. Verfahren nach einem der Ansprüche 3 bis 6, **dadurch gekennzeichnet, dass** der Schritt iii) der Inaktivierung der Amylase durch Erhitzen für eine Zeitdauer zwischen 30 Sekunden und 15 Minuten, vorteilhaft zwischen 2 und 5 Minuten, erfolgt.

8. Verfahren nach einem der Ansprüche 1 bis 7, **dadurch gekennzeichnet, dass** es ferner auf Schritt c) folgend einen Schritt des Aufschäumens durch Beimengen von zumindest einem Emulgator umfasst.

9. Verfahren nach einem der Ansprüche 3 bis 8, **dadurch gekennzeichnet, dass** die Amylase ausgewählt ist aus der Gruppe enthaltend eine α-Amylase fungalen Ursprungs bzw. eine α-Amylase bakteriellen Ursprungs bzw. eine β-Amylase pflanzlichen Ursprungs.

10. Verfahren nach einem der Ansprüche 3 bis 9, **dadurch gekennzeichnet, dass** in Schritt i) ferner ein verzuckerndes Enzym zugegeben wird und dass Schritt iii) auch die Inaktivierung des verzuckernden Enzyms gestattet.

11. Verfahren nach einem der Ansprüche 1 bis 10, **dadurch gekennzeichnet, dass** die native Stärke ausgewählt ist aus der Gruppe enthaltend Maniokstärke, Maisstärke, Weizenstärke, Weichweizenstärke, Gerstenstärke, Kartoffelstärke, Reisstärke, Roggenstärke, Sorghum-Stärke, Hirsestärke, Sagostärke und Bananenstärke.

12. Verfahren nach Anspruch 11, **dadurch gekennzeichnet, dass** die native Stärke Maniokstärke ist.

13. Verfahren nach einem der Ansprüche 1 bis 12, **dadurch gekennzeichnet, dass** es ferner gleichzeitig oder nach dem Schritt d) einen Schritt e) des Beimengens einer Nahrungsmittelzubereitung mit Feststoffteilchen umfasst.

14. Verfahren nach Anspruch 13, **dadurch gekennzeichnet, dass** die Feststoffteilchen ausgewählt sind aus der Gruppe enthaltend Getreideteilchen, Fruchtstückchen, Schokoladenspäne, Karamellsplitter oder Kaffeekörnchen.

15. Halbflüssiges Milchprodukt, das mit dem Verfahren nach einem der Ansprüche 1 bis 15 erhalten werden kann, **dadurch gekennzeichnet, dass** es im Verhältnis zum Gesamtgewicht des Produkts 20 bis 70 Gew.-% einer wässrigen Suspension aus fließfähiger, hydrolysierter nativer Stärke mit einem Dextrose-Äquivalent (DE) unter 5 enthält.

16. Produkt nach Anspruch 15, **dadurch gekennzeichnet, dass** im Verhältnis zum Gesamtgewicht des Produkts enthält:
- 30 bis 70 Gew.-% des Milchprodukts;
- 20 bis 70 Gew.-% der wässrigen Suspension aus fließfähiger, hydrolysierter nativer Stärke mit einem Dextrose-Äquivalent (DE) unter 5;
- gegebenenfalls 5 bis 30 Gew.-% einer Nahrungsmittelzubereitung mit Feststoffteilchen.

17. Milchprodukt nach Anspruch 15 oder 16, **dadurch gekennzeichnet, dass** die wässrige Suspension aus fließfähiger, hydrolysierter nativer Stärke ein Dextrose-Äquivalent (DE) unter oder gleich 1 aufweist.

18. Produkt nach einem der Ansprüche 15 bis 17, **dadurch gekennzeichnet, dass** die Feststoffteilchen ausgewählt sind aus der Gruppe enthaltend Getreideteilchen, Fruchtstückchen, Schokoladenspäne, Karamellsplitter oder Kaffeekörnchen.

19. Produkt nach einem der Ansprüche 15 bis 18, **dadurch gekennzeichnet, dass** es halbaufgeschäumt oder aufgeschäumt ist.

20. Produkt nach einem der Ansprüche 15 bis 19, **dadurch gekennzeichnet, dass** das Milchprodukt ausgewählt ist aus der Gruppe enthaltend Joghurt, Milch, fermentierte Milch, Frischkäse, Dessert-Creme, Sahne, gegebenenfalls Schlagsahne.

21. Verwendung einer wässrigen Suspension aus fließfähiger, hydrolysierter nativer Stärke mit einem Dextrose-Äquivalent (DE) unter oder gleich 10, vorteilhaft unter oder gleich 5 zu deren Anwendung in dem Verfahren von Anspruch 1, um nach Beimengen in ein Milchprodukt, ein stabiles Gel zu bilden, mit dem es möglich ist, Nahrungsmittel-Feststoffteilchen in Suspension in dem Nahrungsmittelprodukt zu halten.

## Claims

1. Method for preparing a semi-fluid dairy product, **characterized in that** it comprises the following successive steps:
a) preparing an aqueous suspension of fluid hydrolysed starch by partial enzymatic hydrolysis of a native starch to a DE value of 10 or less,
b) optionally cooling and maintaining the suspension obtained after step a) at a temperature comprised between 70 and 95°C;
c) cooling the suspension obtained after step a) or b) to a temperature comprised between 40 and 70°C;
d) mixing, at a temperature comprised between 40 and 70°C, the suspension obtained after step c) with a dairy product.

2. Method according to claim 1, **characterized in that** during step a), the native starch is partially hydrolysed to a DE of 5 or less, advantageously of 1 or less.

3. Method according to claim 1 or 2, **characterized in that** step a) comprises the following successive steps:
i) preparing a mixture of water, native starch, optionally a sweetening agent, and amylase in the following weight percentages:
- native starch 2 to 30 %
- amylase 2 to 200 ppm
- sweetening agent 0 to 30 %
- water to complete to 100%
ii) heating the mixture of step i) to a temperature equal to the gelling temperature of native starch ± 20 %; then
iii) inactivating amylase by heating the mixture obtained after step ii) to a temperature comprised between 100 and 130°C, advantageously to a temperature comprised between 105 and 110°C.

4. Method according to claim 3, **characterized in that** during step i), 2 to 20% by weight of native starch are added with respect to the total weight of the mixture.

5. Method according to claim 4, **characterized in that** during step i), 2 to 30 ppm amylase are added.

6. Method according to any of claims 3 to 5, **characterized in that** during step ii), the mixture is held at said heating temperature for 1 to 15 minutes, advantageously 2 to 8 minutes.

7. Method according to any of claims 3 to 6, **characterized in that** step iii) to inactivate the amylase by heating lasts for a time comprised between 30 seconds and 15 minutes, advantageously comprised between 2 and 5 minutes.

8. Method according to any of claims 1 to 7, **characterized in that** it further comprises after step c) an overrun step by incorporating at least one emulsifier.

9. Method according to any of claims 3 to 8, **characterized in that** said amylase is selected from the group consisting of an α-amylase of fungal origin or an α-amylase of bacterial origin, or a β-amylase of plant origin.

10. Method according to any of claims 3 to 9, **characterized in that** at step i) a saccharifying enzyme is also added and that step iii) also enables inactivation of said saccharifying enzyme.

11. Method according to any of claims 1 to 10, **characterized in that** the native starch is selected from the group consisting of cassava starch, corn starch, hard wheat starch, soft wheat starch, barley starch, potato starch, rice starch, rye starch, sorghum starch, millet starch, sago starch and banana starch.

12. Method according to claim 11, **characterized in that** the native starch is cassava starch.

13. Method according to any of claims 1 to 12, **characterized in that** it further comprises either simultaneously or after step d), a step e) to incorporate a food preparation containing solid particles.

14. Method according to claim 13, **characterized in that** said solid particles are selected from the group consisting of cereal pieces, fruit pieces, chocolate chips, caramel chips or coffee beans.

15. Semi-fluid dairy product obtainable by the method according to any of claims 1 to 15, **characterized in that** it contains 20 to 70% by weight, with respect to the total product weight, of an aqueous suspension of fluid hydrolysed native starch having a DE of less than 5.

16. Product according to claim 15, **characterized in that** it contains by weight, with respect to the total weight of said product:
- 30 to 70% of dairy product;
- 20 to 70% of the aqueous suspension of fluid hydrolysed native starch having a DE of less than 5;
- optionally, 5 to 30% of a food preparation containing solid particles.

17. Dairy product according to claim 15 or 16, **characterized in that** said aqueous suspension of fluid hydrolysed native starch has a DE of 1 or less.

18. Product according to any of claims 15 to 17, **characterized in that** said solid particles are selected from the group consisting of cereal pieces, fruit pieces, chocolate chips, caramel chips or coffee beans.

19. Product according to any of claims 15 to 18 **characterized in that** it is overrun or semi-overrun.

20. Product according to any of claims 15 to 19, **characterized in that** the dairy product is selected from the group consisting of a yoghurt, a milk, a fermented milk, a fresh cheese, a cream pudding, a fresh optionally whipped cream.

21. Use of an aqueous suspension of fluid hydrolysed native starch having a DE of 10 or less, advantageously of 5 or less, for use in the method of claim 1, to form, after its incorporation in a dairy product, a stable gel allowing solid food particles to be held in suspension in said food product.
